# EUROPÄISCHE PATENTSCHRIFT

(11) **EP 1 118 782 B1**
(45) Veröffentlichungstag und Bekanntmachung des Hinweises auf die Patenterteilung: **16.02.2005**
(21) Anmeldenummer: 00126367.2
(22) Anmeldetag: 02.12.2000
(51) Int. Cl.: F16C 13/00, F16C 33/78

(54) **Elastische Dichtung für eine Kurvenrolle**
Elastic seal for a cam-follower
Joint élastique pour suiveur de came

(30) Priorität: 18.01.2000 DE 10001681; 18.05.2000 DE 10024529
(43) Veröffentlichungstag der Anmeldung: 25.07.2001
(73) Patentinhaber: INA-Schaeffler KG, 91074 Herzogenaurach (DE)
(72) Erfinder: Weiss, Josef, 91327 Gössweinstein (DE)

(56) Entgegenhaltungen:
- EP-A- 0 959 258
- DE-A- 2 240 144
- US-A- 3 596 533
- US-A- 4 113 327
- US-A- 4 323 287
- US-A- 4 685 184
- US-A- 5 688 055

## Beschreibung

### Anwendungsgebiet der Erfindung

Die Erfindung betrifft eine Kurvenrolle mit mindestens einem Wälzkörpersatz und einem inneren Laufring in Form eines Bolzens, der in einer Aufnahmebohrung eines äußeren Laufringes angeordnet ist, wobei der innere Laufring einen Flansch an jedem äußeren axialen Ende besitzt, der in einer ersten Nut des äußeren Laufringes angeordnet ist, so dass ein axiales Verschieben des äußeren Laufringes gegenüber dem inneren Laufring begrenzt ist und wobei in der ersten Nut in axialer Richtung nach innen versetzt eine weitere, radial nach außen versetzte zweite Nut vorhanden ist, in der ein Dichtelement angeordnet ist.

### Hintergrund der Erfindung

Eine derart abgedichtete Kurvenrolle ist aus der DE-OS 22 40 144 vorbekannt. Sie besteht aus einem Bundbolzen, der gleichzeitig die innere Laufbahn für Lagernadeln bildet, während die äußere Laufbahn von einem dickwandigen Außenring gebildet ist, in dessen Bohrung der Bolzen aufgenommen ist. Der dickwandige Außenring besitzt an beiden axialen Enden eine Nut, in der ein Dichtungsring aufgenommen ist. Dieser Dichtungsring ist umgekehrt L-förmig ausgebildet, wobei sein langer Schenkel an einer Stirnfläche der Nut anliegt, während sein kurzer Schenkel in einer weiteren Nut untergebracht ist, die gegenüber der ersten Nut in radialer Richtung nach außen versetzt ist. Dieser zweite kurze Schenkel ist in radialer Richtung nach innen abgewinkelt und liegt mit einer Dichtungslippe am Bund eines Bolzens bzw. an einer Anlaufscheibe an.

Nachteilig dabei ist, dass dieser Dichtring sehr kompakt, d. h. wenig flexibel ausgebildet ist, so dass ein Nachbefetten nur unter sehr schwierigen Bedingungen Bedingungen möglich ist. Um einen Fettaustausch, d. h. ein Durchfließen des Schmiermittels zu erreichen, muss ein sehr hoher Druck aufgewendet werden. Dieser hohe Druck könnte auf Dauer zu einer Beschädigung des eingesetzten Dichtringes führen.

In diesem Zusammenhang ist aus der gattungsbildenden US 4,685,184 eine Dichtung bekannt geworden, deren T-förmiges Dichtelement einen ersten axial verlaufen den Dichtungsteil aufweist, von dem radial nach innen und nach außen verlaufende Dichtungsteile abzweigen. Dieses T-förmige Dichtungsteil ist ebenfalls sehr Kompakt und damit unflexibel ausgebildet, so daß ein Fettaustausch im Lager nicht bzw. nur sehr erschwert möglich ist.

### Zusammenfassung der Erfindung

Aufgabe der Erfindung ist es daher, eine gattungsgemäße Dichtung für eine Kurvenrolle zu entwickeln, die die vorstehend genannten Nachteile nicht aufweist, d. h. insbesondere ein verbessertes Nachschmieren des Lagers erlaubt. Erfindungsgemäß wird diese Aufgabe nach dem kennzeichnenden Teil von Anspruch 1 dadurch gelöst, dass der dritte Dichtungsteil gegenüber einer Mittelsenkrechten in radialer Richtung einen unter einem Winkel α abweichenden Verlauf nimmt und mit gleichmäßig in Umfangsrichtung voneinander beabstandeten Ausnehmungen versehen ist und dass der zweite Dichtungsteil gegenüber einer Mittelsenkrechten in radialer Richtung einen unter einem Winkel β abweichenden Verlauf nimmt.

Der erste axial verlaufende Dichtungsteil sorgt durch seinen Festsitz auf dem Flansch für einen sicheren Halt der dreiteiligen Dichtung. Die radiale Dicke des ersten Dichtungsteiles ist dabei in vorteilhafter Weise so zu wählen, dass zwischen diesem und äußerem Laufring nur ein ganz geringer Spalt verbleibt, der das Eindringen von Schmutz in das Lagerinnere verhindert. Der vom ersten Dichtungsteil an seinem inneren Ende radial nach außen weisende zweite Dichtungsteil ist als eine flexible Dichtungslippe ausgebildet, die mit der zweiten Nut des äußeren Laufringes eine Labyrinthdichtung bildet. Auf diese Weise wird nochmals das Eindringen von Schmutz in das Lagerinnere verhindert. Der radial nach innen verlaufende dritte Dichtungsteil hat die Funktion, den Anlauf von Flansch und äußerem Laufring, d. h. den Anlauf von Metall auf Metall zu verhindern. Dadurch wird ein Metallabtrag und somit eine Verunreinigung des Schmiermittels, die mit einer Lebensdauerkürzung verbunden ist, unterbunden.

Dass der dritte Dichtungsteil gegenüber einer Mittelsenkrechten in radialer Richtung einen unter einem Winkel α abweichenden Verlauf nimmt dient dazu, den äußeren Laufring bei axialem Versatz abzufedern und gleichzeitig die annähernde Funktion einer schleifenden Dichtung zu übernehmen. Durch diese Schrägstellung, d. h. der Freistellung der Anlaufflächen, wird das Reibmoment des Lagers so gering als möglich gehalten.

Die mit gleichmäßig in Umfangsrichtung voneinander beabstandeten Ausnehmungen des dritten Dichtungsteils sorgen dafür, dass diese einerseits als ein zusätzliches Schmiermittelreservoir genutzt werden und andererseits innerhalb des Lagers ein Schmiermittelaustausch problemlos möglich ist. Das Schmiermittel kann beim Nachfetten unter Druck nach außen durchfließen, so dass ein gleichmäßiger Austausch gewährleistet ist.

Dadurch, dass der zweite Dichtungsteil, die Dichtlippe, gegenüber einer Mittelsenkrechten in radialer Richtung einen unter einem Winkel β abweichenden Verlauf nimmt, ist sicher gestellt, dass die zweite Nut durch diese Dichtlippe in zwei Räume unterteilt ist, die ebenfalls zur Aufnahme von Schmiermittel genutzt werden können. Die sich bildenden Fettkragen in diesem Raum dichten außerdem das Lager noch zusätzlich gegen Verschmutzung ab.

Weitere vorteilhafte Ausgestaltungen der Erfindung sind in den Ansprüchen 2 bis 4 beschrieben.

So ist nach Anspruch 2 vorgesehen, dass die Flansche einerseits durch einen fest mit dem Bolzen verbundenen Bund und andererseits durch eine Anlaufscheibe gebildet sind, die auf den Bundbolzen aufgepresst ist.

Schließlich ist nach Anspruch 3 vorgesehen, dass der Wälzkörpersatz der Kurvenrolle als in einem Käfig geführte Lagernadeln ausgebildet ist, wobei nach Anspruch 4 der Bolzen eine axial verlaufende Schmiermittelbohrung aufweist, von der eine in den Laufbahnbereich des Wälzkörpersatzes mündende, radial verlaufende Schmiermittelbohrung abzweigt. Auf diese Weise kann eine effektive Befettung des Lagers realisiert werden.

Die Erfindung wird an nachstehendem Ausführungsbeispiel näher erläutert.

### Kurze Beschreibung der Zeichnungen

Es zeigen:
- Figur 1: eine Seitenansicht einer erfindungsgemäßen Kurvenrolle, teilweise geschnitten, mit neutraler Stellung des Außenringes,
- Figur 2: eine vergrößerte Darstellung des Dichtelementes gemäß Figur 1,
- Figur 3: eine Seitenansicht auf das Dichtelement nach Figur 2 und
- Figur 4: eine weitere Seitenansicht einer erfindungsgemäßen Kurvenrolle, teilweise geschnitten, mit versetzter Stellung des Außenringes.

### Ausführliche Beschreibung der Zeichnungen

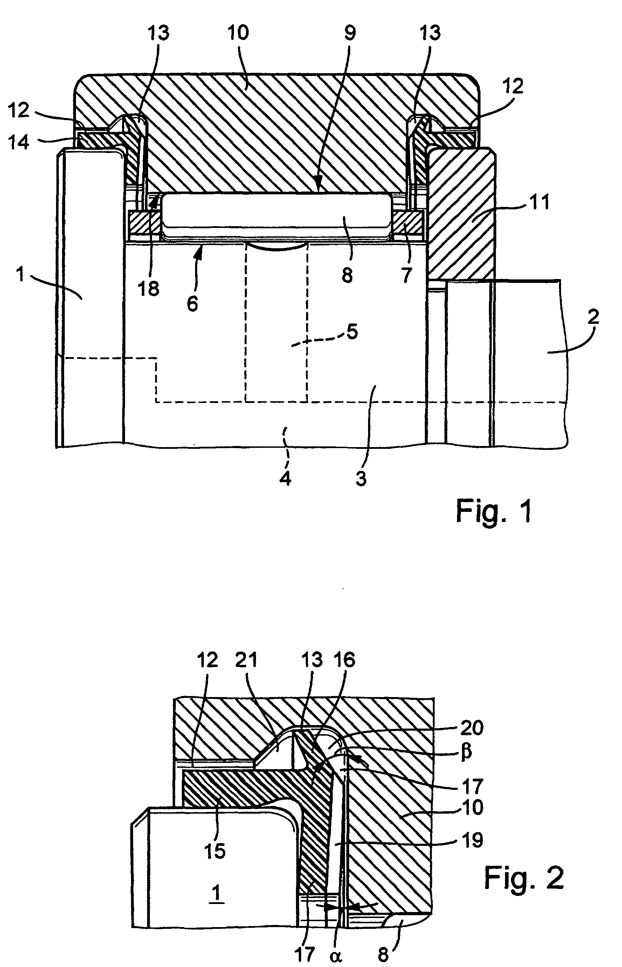

Die in Figur 1 gezeigte Kurvenrolle besteht aus dem als inneren Laufring wirkenden Bolzen 2 und aus dem äußeren Laufring 10, zwischen denen auf zugehörigen Laufbahnen 6 und 9 im Käfig 7 geführte Lagernadeln 8 abwälzen. Der äußere Laufring 10 ist dabei in einer neutralen Stellung dargestellt, d. h. sein die Laufbahn 9 tragender Mittelteil befindet sich gleichweit vom Bund 1 des Bolzens 2 und von der Anlaufscheibe 11 entfernt. Der Bolzen 2 ist in seinem Zentrum mit der durchgehenden axialen Schmierbohrung 4 versehen, von der im Mittelteil 3 die radiale Schmierbohrung 5 abzweigt, die im Innenlaufbahnbereich 6 mündet. Der äußere Laufring 10 besitzt die Aufnahmebohrung 18, in der unter Freilassung eines Zwischenraums für die Lagernadeln 8 der Bolzen 2 aufgenommen ist, wobei an deren beiden Enden die erste Nut 12 vorhanden ist, in der der Bund 1 des Bolzens 2 und die Anlaufscheibe 11 angeordnet sind. Durch diese Ausgestaltung ist sichergestellt, dass ein axiales Verschieben des äußeren Laufringes 10 durch den Bund 1 bzw. die Anlaufscheibe 11 begrenzt ist.

Wie aus Figur 1 und insbesondere auf Figur 2 ersichtlich, zweigt von der ersten Nut 12 die zweite Nut 13 ab, die gegenüber der ersten Nut 12 in axialer Richtung nach innen und in radialer Richtung nach außen versetzt angeordnet ist. In der Nut 12 ist das Dichtelement 14 angeordnet, das mit dem ersten axial verlaufenden Dichtungsteil 15 fest auf dem Bund 1 bzw. auf der Anlaufscheibe 11 aufgesetzt ist. Vom ersten Dichtungsteil 15 zweigt an seinem axialen inneren Ende das zweite Dichtungsteil 16 in Form einer Dichtlippe radial nach außen in die zweite Nut 13 ab. Die Dichtlippe 16 weicht gegenüber einer Mittelsenkrechten nach außen um den Neigungswinkel β ab, so dass die zweite Nut 13 in die beiden Teilräume 20 und 21 untergliedert ist, die als zusätzliche Schmiermittelräume genutzt werden können. Die Dichtlippe 16 bildet mit der Wandung der Nut 13 eine Spaltdichtung, so dass das Eindringen von Schmutz in das Lagerinnere erschwert ist.

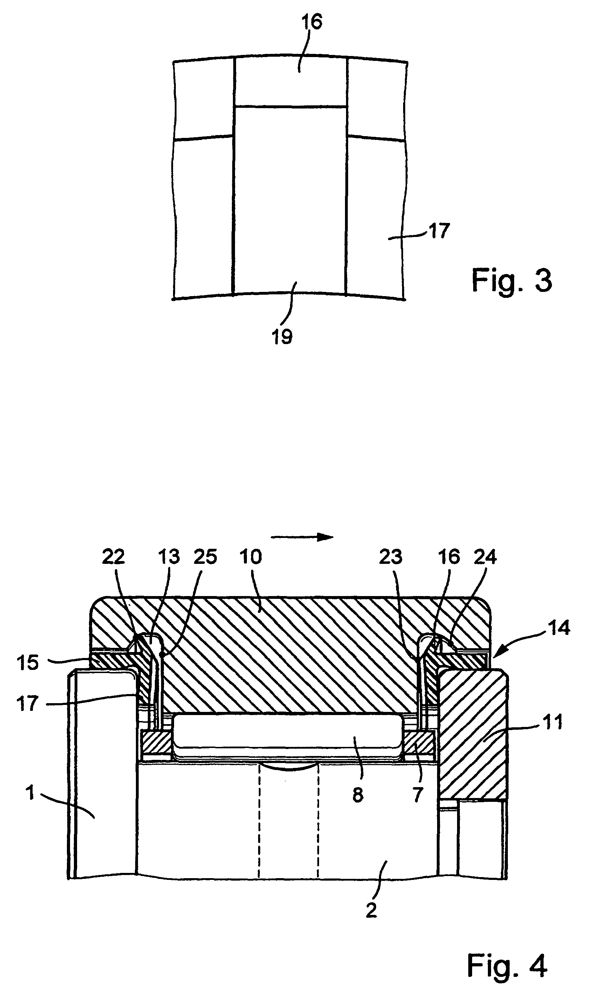

Entgegengesetzt zur Dichtlippe 16 verläuft radial nach innen der dritte Dichtungsteil 17, der gegenüber einer Mittelsenkrechten um den Neigungswinkel α versetzt nach außen verläuft, so dass der Teil 17 am Bund 1 und an der Anlaufscheibe 11 nur punktförmig anliegt. Wie aus den Figuren 2 und 3 erkennbar, ist der dritte Dichtungsteil 17 des Dichtelementes 14 mit gleichmäßig in Umfangsrichtung voneinander beabstandeten Ausnehmungen 19 versehen, die einerseits ebenfalls als Schmiermittelreservoir wirken und die andererseits auch einen ungehinderten Schmiermitteldurchfluß durch das Lager ermöglichen. Dieser erfolgt derart, dass von außen über die axiale Schmierbohrung 4 und die radiale Schmierbohrung 5 Schmiermittel in den Laufbahnbereich 6 gelangt, das über die Ausnehmungen 19 des dritten Dichtungsteils 17, die Labyrinthdichtung zwischen Dichtlippe 16 und Nut 13 sowie über den Spalt zwischen äußerem Laufring 10 und erstem Dichtungsteil 15 das Lager verlassen kann. Der erste axial verlaufende Dichtungsteil 15 des Dichtelementes 14 ist dabei so ausgebildet, dass er die erste Nut 12 fast vollständig ausfüllt, so dass nur ein kleiner Spalt gebildet ist und demzufolge das Eindringen von Verunreinigungen von außen in das Lagerinnere erschwert ist.

In Figur 4 ist die Kurvenrolle mit in Pfeilrichtung aus der Neutralstellung heraus nach rechts versetztem äußeren Laufring 10 gezeigt. Bei dessen Rotation sind durch die beiden Dichtelemente 14 Berührungspunkte 22 und 23 zwischen dem Dichtungsteil 16 und der Wandung der zweiten Nut 13 linksseitig sowie zwischen dem Übergangsbereich von zweitem und drittem Dichtungsteil 16 und 17 und der zurückgesetzten Stirnfläche des äußeren Laufrings 10 rechtsseitig gebildet. Auf diese Weise ist eine schleifende Dichtung entstanden. Bewegt sich der äußere Laufring 10 entgegengesetzt zur Pfeilrichtung, so entsteht wiederum eine schleifende Dichtung, die in diesem Falle durch die Berührungspunkte 24 und 25 gebildet ist.

### Bezugszeichen

- 1: Bund
- 2: Bolzen
- 3: Mittelteil
- 4: axiale Schmierbohrung
- 5: radiale Schmierbohrung
- 6: Innenlaufbahn
- 7: Käfig
- 8: Lagemadel
- 9: Außenlaufbahn
- 10: äußerer Laufring
- 11: Anlaufscheibe
- 12: erste Nut
- 13: zweite Nut
- 14: Dichtelement
- 15: erster axial verlaufender Dichtungsteil
- 16: zweiter radial nach außen verlaufender Dichtungsteil
- 17: dritter radial nach innen verlaufender Dichtungsteil
- 18: Aufnahmebohrung
- 19: Ausnehmung
- 20: Teilraum
- 21: Teilraum
- 22: Berührungspunkt
- 23: Berührungspunkt
- 24: Berührungspunkt
- 25: Berührungspunkt
- α, β: Neigungswinkel

## Patentansprüche

1. Kurvenrolle mit mindestens einem Wälzkörpersatz und einem inneren Laufring in Form eines Bolzens (2), der in einer Aufnahmebohrung (18) eines äußeren Laufringes (10) angeordnet ist, wobei der innere Laufring einen Flansch an jedem äußeren axialen Ende besitzt, der in einer ersten Nut (12) des äußeren Laufringes (10) angeordnet ist, so dass ein axiales Verschieben des äußeren Laufringes (10) gegenüber dem inneren Laufring begrenzt ist und wobei in der ersten Nut (12) in axialer Richtung nach innen versetzt eine weitere, radial nach außen versetzte zweite Nut (13) vorhanden ist, in der ein Dichtelement (14) angeordnet ist, wobei das Dichtelement (14) T-förmig einstückig derart ausgebildet ist, dass ein erster axial verlaufender Dichtungsteil (15) auf dem Flansch drehfest aufgesetzt ist, vom ersten Dichtungsteil (15) an seinem inneren Ende ein radial nach außen weisender, in der zweiten Nut (13) aufgenommener zweiter Dichtungsteil (16) und ein radial nach innen weisender, dritter Dichtungsteil (17) abzweigen, so dass ein axialer Anlauf von Flansch und äußerem Laufring (10) durch den dritten Dichtungsteil (17) verhindert ist,
**dadurch gekennzeichnet, dass** der dritte Dichtungsteil (17) gegenüber einer Mittelsenkrechten in radialer Richtung einen unter einem Winkel α abweichenden Verlauf nimmt, und mit gleichmäßig in Umfangsrichtung voneinander beabstandeten Ausnehmungen (19) versehen ist und
dass der zweite Dichtungsteil (16) gegenüber einer Mittelsenkrechten in radialer Richtung einen unter einem Winkel β abweichenden Verlauf nimmt.

2. Kurvenrolle nach Anspruch 1, **dadurch gekennzeichnet**, die Flansche einerseits durch einen Bund (1) des Bolzens (2) und andererseits durch eine Anlaufscheibe (11) gebildet sind.

3. Kurvenrolle nach Anspruch 1, **dadurch gekennzeichnet, dass** der Wälzkörpersatz als in einem Käfig (7) geführte Lagernadeln (8) ausgebildet ist.

4. Kurvenrolle nach Anspruch 1, **dadurch gekennzeichnet, dass** der Bolzen (2) eine axial verlaufende Schmiermittelbohrung (4) aufweist, von der eine in den Laufbahnbereich (6) des Wälzkörpersatzes mündende, radial verlaufende Schmiermittelbohrung (5) abzweigt.

## Claims

1. Cam roller having at least one set of rolling elements and an inner raceway in the form of a bolt (2) which is arranged in a locating bore (18) of an outer raceway (10), the inner raceway having a flange at each outer axial end, this flange being arranged in a first groove (12) of the outer raceway (10), so that an axial displacement of the outer raceway (10) relative to the inner raceway is limited, and there being a further second groove (13) in the first groove (12), this second groove (13) being offset axially inwards and radially outwards, a sealing element (14) being arranged in this second groove (13), the sealing element (14) being designed in one piece in a T shape in such a way that a first axially running sealing part (15) is mounted on the flange in a rotationally fixed manner and a second sealing part (16) which points radially outwards and is accommodated in the second groove (13) and a third sealing part (17) which points radially inwards branch off from the first sealing part (15) at its inner end, so that axial contact between flange and outer raceway (10) is prevented by the third sealing part (17), **characterized in that** the third sealing part (17) deviates from a centre perpendicular in the radial direction by an angle α and is provided with recesses (19) uniformly spaced apart in the circumferential direction, and **in that** the second sealing part (16) deviates from a centre perpendicular in the radial direction by an angle β.

2. Cam roller according to Claim 1, **characterized in that** the flanges are formed on the one hand by a collar (1) of the bolt (2) and on the other hand by a stop disc (11).

3. Cam roller according to Claim 1, **characterized in that** the set of rolling elements is designed as needle bearings (8) guided in a cage (7).

4. Cam roller according to Claim 1, **characterized in that** the bolt (2) has an axially running lubricant bore (4), branching off from which is a radially running lubricant bore (5) opening into the track region (6) of the set of rolling elements.

## Revendications

1. Suiveur de came comportant au moins un jeu d'éléments roulants et une bague de roulement intérieure sous la forme d'un boulon (2), lequel est disposé dans l'alésage d'accueil (18) d'une bague de roulement (10) extérieure, dans lequel la bague de roulement intérieure possède un flasque à chacune de ses extrémités axiales extérieures, lequel est disposé dans une première rainure (12) de la bague de roulement (10) extérieure, de telle sorte qu'un déplacement axial de la bague de roulement (10) extérieure par rapport à la bague de roulement intérieure soit limité et dans lequel, dans la première rainure (12), décalée vers l'intérieur dans la direction axiale, une deuxième rainure (13) supplémentaire, décalée radialement vers l'extérieur est présente, dans laquelle un élément de joint (14) est disposé, l'élément de joint (14) étant configuré en une seule pièce en forme de T de telle manière qu'une première partie de joint (15) s'étendant axialement soit posée sur le flasque de manière solidaire en rotation, une deuxième partie de joint (16) dirigée radialement vers l'extérieur, enfermée dans la deuxième rainure (13) et une troisième partie de joint (17) dirigée radialement vers l'intérieur bifurquant de la première partie de joint (15) à son extrémité intérieure, de telle sorte qu'une course axiale du flasque et de la bague de roulement (10) extérieure soit entravée par la troisième partie de joint (17),
**caractérisé en ce que** la troisième partie de joint (17) se déroule en s'écartant d'un angle α vis-à-vis d'une médiatrice dans la direction radiale, et est pourvue d'évidements (19) espacés uniformément les uns des autres sur son pourtour, et
**en ce que** la deuxième partie de joint (16) se déroule en s'écartant d'un angle β vis-à-vis d'une médiatrice dans la direction radiale.

2. Suiveur de came selon la revendication 1, **caractérisé en ce que** les flasques sont formés d'un côté par un collier (1) du boulon (2) et d'un autre côté par un anneau de sécurité (11).

3. Suiveur de came selon la revendication 1, **caractérisé en ce que** le jeu d'éléments roulants est configuré comme des aiguilles de roulement (8) introduites dans une cage (7).

4. Suiveur de came selon 1a revendication 1, **caractérisé en ce que** le boulon (2) présente un alésage de lubrifiant (4) s'étendant axialement, à partir duquel bifurque un alésage de lubrifiant (5) s'étendant radialement, débouchant dans la zone de contact (6) du jeu d'éléments roulants.
